# EUROPEAN PATENT SPECIFICATION

(11) **EP 4 499 932 B1**
(45) Date of publication and mention of the grant of the patent: **18.03.2026**
(21) Application number: 23712923.4
(22) Date of filing: 24.03.2023
(51) Int. Cl.: E03F 5/10, E01C 13/02, B01D 39/20, E02B 11/00, E03B 3/02

(54) **STORM WATER STORAGE SYSTEM**
REGENWASSERSPEICHERSYSTEM
SYSTÈME DE STOCKAGE D'EAUX PLUVIALES

(30) Priority: 24.03.2022 EP 22163988
(43) Date of publication of application: 05.02.2025
(73) Proprietor: ROCKWOOL A/S, 2640 Hedehusene (DK)
(72) Inventor: LOS, Daan, 2640 Hedehusene (DK)
(74) Representative: Gill Jennings & Every LLP
(86) International application number: PCT/EP2023/057652
(87) International publication number: WO 2023/180535

(56) References cited:
- JP-A- 2007 183 829
- JP-A- 2016 089 378
- KR-B1- 102 141 002
- TW-A- 200 902 802
- US-A1- 2015 247 313

## Description

### Field of the invention

The invention relates to a system for storing storm water.

### Background of the invention

Storm water (e.g. rain, snow, sleet, hail and water run-off from residential and commercial areas) is collected and transported by storm water drain systems. Typically, the storm water is channelled into the storm water system via storm water drains in the ground, also called storm water gullies, wells, catch basins or storm water inlets. Storm water drain systems typically have a number of storm water drain pits, which lead to a network of underground drain pipes. The storm water is collected by the storm water drain pits, filtered to remove particulates or debris and can then flow to a desired location.

A storm water drain system will have a given maximum capacity to drain water. In times of high precipitation, storm water drainage systems may become overwhelmed with excess water leading to local flooding and waterlogging of the ground. In order to combat this, storm water storage areas, such as water infiltration systems, may be installed. These are designed to quickly collect, temporarily store and then slowly release large volumes of excess water. The water can subsequently flow to water drainage points. In some cases, the buffered water may be allowed to dissipate into the surrounding ground once it is dry enough and/or used at a later stage. In this way, storm water collection systems can prevent flooding by collecting and temporarily storing storm water and slowly releasing it in accordance with the drainage capacity of an associated drain system or in accordance with the dissipation capacity of an associated infiltration system. In some cases, a storm water management system may include a buffering arrangement which can both lead to local infiltration into the ground and also to some associated drain arrangements.

Examples of water management systems can be seen in WO2013/113410 A1 or WO2014/029873 A1. These systems are based on sustainable mineral wool elements with an extremely high capacity for absorbing and buffering water.

WO2015069098 A1 discloses a drainage system for use in the ground, comprising a module drainage element provided with a storage space. The storage space is at least partly surrounded by a filter fabric and may optionally be partly filled with a liquid-absorbing material.

The water from large surfaces typically enters infiltration systems, such as that in WO2013/113410 A1, WO2014/029873 A1 or WO2015069098 A1, via large inlet pipes, especially around utility or industrial buildings. The water will afterwards have to be distributed from the large inlet pipes to several smaller pipes, before it can enter the mineral wool elements of the infiltration system. This complicates installation, as it is necessary to connect the smaller pipes to the large pipes. This process is time-consuming.

US2015/247313 A1 discloses a storm water delay device comprising a coherent manmade vitreous fibre substrate (MMVF substrate) and first and second conduits in fluid communication with the MMVF substrate.

JP2016089378 A relates to an athletic field drainage structure comprising a gutter, a water permeable surface layer and a rainwater storage infiltration tank.

JP2007183829 A discloses an underground reservoir tank design comprising a U-shaped gutter and a series of water-delay units.

TW200902802 A relates to a dust removal control basin comprising upper and lower pits through which water can flow from an inflow pipe.

KR102141002 B1 discloses a rainwater management system comprising a rainwater collection well, a drain pipe, a collection pipe and a waterproof external wall.

In general, the process of installing storm water storage and collection systems into the ground is very disruptive. It can result in entire streets being excavated which is disruptive to the residents of the area. Often municipalities wait until there are multiple reasons to excavate a street (for example to address other piping or cables underground) before installing water infiltration systems. Furthermore, for industrial or utility buildings, the disruption to the surrounding area can impact the functioning of the building and cause loss of revenue. For example, when storm water storage systems are installed in car parks of buildings such as shopping centres or supermarkets, this prevents the car parking spaces from bringing in revenue from customers.

It would therefore be desirable to provide a storm water storage system that can be used to prevent localised flooding by collecting and temporarily storing large volumes of storm water and slowly releasing it into the surrounding ground. It would be desirable for this system to be simple and quick to install in the ground, thus minimising any disruption to the area. It would be desirable for this system to avoid or reduce the need for connection to pipes, to simplify installation. It would be desirable to have a robust way to quickly transport rainwater into a buffer system.

### Summary of the invention

The present inventors have provided a storm water storage system comprising a storm water collection well having at least one inlet and one or more outlets, with one or more void channels extending away from and in fluid communication with at least one outlet. A storm water buffer system, which comprises man-made vitreous fibres (MMVF) bonded with a cured binder composition, encloses and is in fluid communication with at least one side surface of the one or more void channels.

This system has the benefit of being able to store high volumes of storm water in the MMVF buffer system, and to allow this water infiltrate into the surrounding ground. Due to the capillary balance, when the ground surrounding the MMVF buffer system is saturated, storm water is retained within the buffer system. As the surrounding ground dries out, the capillary balance shifts, and the water infiltrates from the MMVF buffer system into the surrounding ground. This is beneficial because the slow infiltration of water from the system into the surrounding ground can promote a healthier soil environment for plants and organisms living in the soil.

Crucially, the void channel that is in fluid communication with the storm water collection well and the buffer system allows storm water to rapidly enter the buffer system. The storm water flows along the void channel and passes into the buffer system, which encloses the void channel at at least one side surface. This can prevent localised flooding by rapidly absorbing and storing storm water.

The present inventors found that this system according to the invention is particularly effective at storing storm water and preventing localised flooding, while being quick to install. This system does not require the fitting of lots of pipes which significantly reduces installation time. Furthermore, the system is flexible as the MMVF buffer system can be cut or made to fit any shape. This simplifies the installation process and minimises disruption to the surrounding area.

In a first aspect of the invention, there is provided a storm water storage system comprising:
- a storm water collection well (1) having at least one inlet (2), (9) for storm water to enter the storm water collection well (1); and one or more outlets (3) for storm water to exit the storm water collection well (1);
- one or more void channels (4) each having a bottom surface, an upper surface and side surfaces, wherein each void channel extends away from and is in fluid communication with at least one outlet (3) and each void channel has a width in the range of 20 cm to 200 cm;
- a storm water buffer system (5) comprising man-made vitreous fibres (MMVF) bonded with a cured binder composition, wherein the storm water buffer system encloses and is in fluid communication with at least one side surface of the one or more void channels (4);
- a lid (6) positioned on top of the storm water buffer system (5) such that the upper surface of the void channel is formed by the lid (6), wherein the lid comprises a manhole or inspection cover.

In a second aspect of the invention, there is provided a method of installing a storm water storage system, comprising the step of positioning at least one storm water storage system as described herein in the ground.

### Brief description of the figures

Figure 1 shows a storm water storage system according to an embodiment of the invention.
Figure 2 shows a storm water storage system according to an embodiment of the invention.
Figure 3 shows a cross-section of a storm water storage system according to an embodiment of the invention.
Figure 4 shows a storm water storage system according to an embodiment of the invention.

### Detailed description

The invention relates to a storm water storage system comprising:
- a storm water collection well (1) having at least one inlet (2), (9) for storm water to enter the storm water collection well (1); and one or more outlets (3) for storm water to exit the storm water collection well (1);
- one or more void channels (4) each having a bottom surface, an upper surface and side surfaces, wherein each void channel extends away from and is in fluid communication with at least one outlet (3) and each void channel has a width in the range of 20 cm to 200 cm;
- a storm water buffer system (5) comprising man-made vitreous fibres (MMVF) bonded with a cured binder composition, wherein the storm water buffer system encloses and is in fluid communication with at least one side surface of the one or more void channels (4);
- a lid (6) positioned on top of the storm water buffer system (5) such that the upper surface of the void channel is formed by the lid (6), wherein the lid comprises a manhole or inspection cover.

The term "storm water" has its usual meaning in the art, and includes water from precipitation such as rain, snow, sleet or hail and water run-off from residential and commercial areas.

The term "storm water storage system" has its normal meaning in the art. It is a system that is capable of absorbing and storing water. It may also be called a storm water collection system.

The term "storage" in "storm water storage system "means the water is held within the system for a period of time. The water may be slowly released from the system into the surrounding ground. The time period in which water remains within the system may depend on the degree of saturation of the surrounding ground.

The term "lid" means a structure that forms the upper surface of the void channel and encloses the void channel. It provides structural integrity to the void channel by providing a loadbearing surface over the void channel. It also helps prevent soil, and other material, from entering the void channel from its upper surface. The lid may also be called a roof or cover.

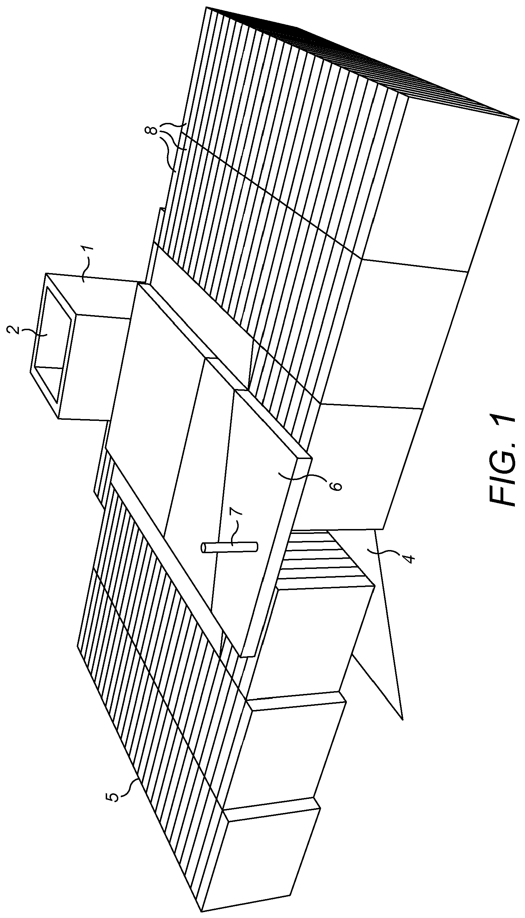

The storm water storage system comprises a storm water collection well (1), as shows in Figures 1 to 4. This term has its normal meaning in the art. It is a receptacle for collecting storm water. It may also be called a storm water collection pit, chamber, basin or gully.

Preferably, the storm water collection well has one or more side walls, a bottom and a top forming an internal volume i.e. a hollow centre. The storm water collection well is suitable for being buried or partially buried in the ground.

Preferably the storm water collection well is formed of concrete, plastic or cast-iron. The storm water collection well may be any shape, but preferably it is in the shape of a cylinder, cube or cuboid. When the storm water collection well is in the shape of a cuboid, preferably the bottom of the housing is square.

Preferably the storm water collection well is at least partially buried within the ground. Preferably the storm water collection well is buried in the ground such that the top (i.e. the top surface) is at ground level i.e. is accessible from the ground.

The storm water collection well comprises at least one inlet (2), (9) for storm water to enter the storm water collection well; and one or more outlets (3) for storm water to exit the storm water collection well. These can be seen in Figures 1 to 4. Preferably, the at least one inlet is positioned above the one or more outlets.

The at least one inlet of the storm water collection well is for storm water to enter the storm water collection well. Optionally, the top of the storm water collection well comprises at least one inlet for storm water to enter the internal volume of the storm water collection well. Optionally at least one inlet may be positioned in one of the side walls of the collection well, preferably in the top half of the side wall. This maximises the volume of the storm water collection well used to collect storm water. It also simplifies installation of the storm water collection well.

The at least one inlet may be an aperture. The inlet may be any shape i.e. circular, square or rectangular. Preferably, the inlet is circular. Alternatively, the inlet may be a pipe in fluid communication with the collection well.

The collection well may comprise one or more inlets, each one may be according to any embodiment described above.

Preferably, the storm water collection well is covered with a storm water collection well lid. Preferably the storm water collection well lid is hinged such that it can be opened and closed and provides a means of accessing the storm water collection well from the ground. This is useful for general maintenance. This is also known as a well cover or manhole cover. The storm water collection well lid can be any dimension suitable for covering the collection well. For example, it may be 20 to 300 cm by 20 to 300 cm. Preferably it is formed of concrete, plastic or cast iron.

The storm water collection well comprises one or more outlets (3) for storm water to exit the storm water collection well, shows in Figures 1 to 4. Preferably, the one or more outlet is an aperture or opening in storm water collection well. Preferably the aperture has a surface area as large as the combined surface area of all inlets to the collection well, to prevent water from accumulating in the well. The aperture may be in any shape, preferably fitting the shape of the void channel.

Preferably, the one or more outlet is positioned below the at least one inlet. Preferably the outlet is positioned in a side wall of the storm water collection well for storm water to exit the internal volume of the storm water collection well. Preferably the outlet is positioned in the lower half of the side wall, when in use. This minimises the amount of water that collects, and stagnates, in the well.

The storm water collection well may comprise more than one outlet. For example, the storm water collection well may be a cylindrical well with two outlets at 90 degrees to each other. For example, the storm water collection well may have four walls, each wall having an outlet into a void channel. The four outlets lead water into the buffer system using four radially extending void channels, one to each side.

Preferably, the storm water collection well further comprises a trap to remove or otherwise filter particulate matter or detritus from the storm water. The trap may be of any known type, such as a sand trap, sediment trap, spin-down filter or cartridge filter. For instance, the trap may exclude particulate matter or detritus from passing through the collection well and into the one or more void channels. This prevents particulate matter or detritus from occupying the one or more void channels and reducing the effective volume of the one or more void channels over time.

Since the storm water collection well is preferably accessible from the ground via a lid, the trap can be easily accessed, and debris and detritus can be removed. This improves ease of maintenance of the storm water collection system.

The storm water collection system comprises one or more void channels (4), shown in Figures 1 to 4. Each void channel has a bottom surface, an upper surface and side surfaces. The number of side surfaces that each void channel has may vary depending on the size and/or shape of each void channel.

The bottom surface of the void channel is essentially defined by the area over which storm water may flow along the length of the void channel. As such, the bottom surface of the void channel can be made from any suitable material along which water may flow, for example, soil or gravel. Preferably, the bottom surface of the void channel is formed of a material that can resist erosion by fast flowing water. For example, it may be a geotextile material, mineral wool or concrete.

Preferably the bottom surface of the void channel is not formed of the material used in the storm water buffer system, i.e. it is not able to buffer or store water to any appreciable extent. This is so that water may more easily flow along the bottom surface of the void channel, more quickly distributing it along the length of the channel. This means that the water may enter the storm water buffer system more evenly. This results in less local saturation in the storm water buffer system, such as in the area closer to the storm water collection well outlets. This will in turn more evenly infiltrate water from the storm water buffer system into the surrounding ground.

The upper surface of the void channel is formed by a lid (6). The lid is positioned on top of the storm water buffer system and arranged such that it covers the upper surface of the void channel. As will be understood, this encloses the void channel. The lid provides structural support over the void channel and prevents soil and other material from entering the void channel. The lid comprises a manhole or inspection cover so that the void channel may be accessed for maintenance reasons or so it may be cleaned.

The side surfaces if the void channel define the area through which water can pass from the void channel into the storm water buffer system. Preferably, the side surfaces of the void channels are substantially formed of the storm water buffer system. Storm water can then pass directly from the void channel into the storm water buffer system. The side surfaces may be reinforced to help maintain their structural integrity, however, this is not typically required if suitable MMVF bonded with a suitable cured binder composition is used in the storm water buffer system. An important feature of the invention is that water can easily pass from the void channel into the storm water buffer system. Preferably, the storm water buffer system encloses and is in fluid communication with at least two side surfaces of the one or more void channels, more preferably, at least three side surfaces of the one or more void channel. This maximises the speed at which storm water can pass from the void channel into the storm water buffer system. Any other side surfaces of the void channel not enclosed by the storm water buffer system may be formed of any suitable material to maintain the structural integrity of the void channel, for example a water-impermeable material or concrete.

Each void channel extends away from at least one outlet of the storm water collection well. Each void channel is in fluid communication with at least one outlet of the storm water collection well. In this way, storm water that has entered the storm water collection well via the inlet(s) exits the well via the outlet(s) and passes directly into the void channel(s).

The term "channel" has its normal meaning in the art. It may also be called a passage, canal, conduit, trench, tunnel, gutter or trough. Storm water exiting the outlet flows along the void channel. By "void channel" it is meant that there is a channel which has a substantially empty volume for water to flow through. It may contain minor amounts of material that do not impede this function, such as soil and stones.

In particular, it is preferred that the void channel does not need to contain any supports to maintains its structural integrity. This means the void channel can be formed in the process of installing the storm water buffer system, without the need for additional pipework or other supporting material.

Preferably at least one void channel extends substantially horizontally away from at least one outlet of the storm water collection well. By this, it is meant that the void channel extends substantially parallel to the ground above i.e. the road above.

The one or more void channel can be any suitable shape for a channel. It may be straight or substantially straight. It may have an undulating shape and may comprise bends. However, it is preferred that the one or more void channel is substantially straight as this simplifies installation of the storm water storage system and allows water to flow more freely along the void channel.

It is preferable that the cross-sectional area of the void channel, perpendicular to its length, is rectangular, or square. This means that the void channel is preferably a cuboid, or cuboidal in shape. The void space may also be cylindrical or cylinder-like in shape, in which case the bottom surface of the void channel will be understood to be the lower portion of the channel over which the water may flow along its length, with the side surfaces being those through which the water passes into the storm water buffer system.

The height and width of the one or more void channels needs to be sufficiently large such that, in the event of a storm, a large volume of water can rapidly enter the one or more void channels and be pass into the buffer material. The dimensions may be determined by the expected rate at which storm water may enter the storm water storage system. However, a void channel that is too large will reduce the volume of buffer material in the system, and therefore reduce the effective total volume of water that can be stored in the system. A void channel that is too large may also compromise the structural integrity of the storm water storage system. The height and width of the void channel helps to maximise the rapid storage of storm water without negatively affecting the overall capacity or structural integrity of the buffer material.

Void channels have a width in the range of 20 cm to 200 cm, preferably 30 cm to 150 cm, most preferably 50 cm to 80 cm. This ensures the lid that covers the channel is not too heavy, but the void channel is wide enough for a large volume of water. Preferably the one or more void channels have a height in the range of 30 cm to 200 cm, preferably 50 cm to 150 cm.

Preferably the one or more void channels has a height in the range of 30 cm to 200 cm, preferably 50 cm to 150 cm; and optionally a length in the range of 1 m to 100 m, depending on the site of installation. For instance, the one or more void channels may have a height in the range of 30 cm to 200 cm, preferably 50 cm to 150 cm; and a length in the range of 1 m to 100 m. Preferably, the height to width ratio of the one or more void channels is from 5:1 to 5:4, more preferably from 10:3 to 10:6.

As such, the preferred width of the one or more void channels may depend on the height of the one or more void channels. For a void channel with a height of about 100 cm, the width of the void channel is preferably from 30 cm to 60 cm, more preferably from 40 cm to 50 cm. For a void channel with a height of about 50 cm, the width of the void channel is preferably from 20 cm to 40 cm.

A particular benefit of the above-mentioned dimensions, in addition to its ease of construction, is that one single void channel can serve water to a large volume of storm water buffer system. This addresses the problems associated with previous systems that require the use of multiple smaller pipes to serve water to an equivalent volume of storm water buffer system hence the present system is easier and more efficient to construct.

The storm water storage system comprises a storm water buffer system (5) comprising man-made vitreous fibres (MMVF) bonded with a cured binder composition. This is shown in Figures 1 to 4.

Preferably, the storm water buffer system is formed of man-made vitreous fibres (MMVF) bonded with a cured binder composition. The man-made vitreous fibres (MMVF) can be glass fibres, ceramic fibres, basalt fibres, slag wool, stone wool and others, but are usually stone wool fibres. Stone wool generally has a content of iron oxide at least 3% by weight and content of alkaline earth metals (calcium oxide and magnesium oxide) from 10 to 40 % by weight, along with the other usual oxide constituents of MMVF (e.g. silica and alumina). The stone wool generally comprises alkali metals (sodium oxide and potassium oxide), in the range of 1 to 20 % by weight. The stone wool may also include titania and other minor oxides. All fibre percentages by weight are based upon the total weight of the fibre.

Stone fibres commonly comprise the following oxides, in percent by weight based upon the total weight of the stone fibres:
SiO₂: 30 to 51
Al₂O₃: 12 to 30
CaO: 8 to 30
MgO: 2 to 25
FeO (including Fe₂O₃): 2 to 15
Na₂O+K₂O: not more than 10
CaO+MgO: 10 to 30

In preferred embodiments the MMVF have the following levels of elements, calculated as oxides in percent by weight based upon the total weight of the MMVF:
SiO₂: at least 30, 32, 35 or 37; not more than 51, 48, 45 or 43
Al₂O₃: at least 12, 16 or 17; not more than 30, 27 or 25
CaO: at least 8 or 10; not more than 30, 25 or 20
MgO: at least 2 or 5; not more than 25, 20 or 15
FeO (including Fe2O3) at least 4 or 5; not more than 15, 12 or 10
FeO+MgO: at least 10, 12 or 15; not more than 30, 25 or 20
Na₂O+K₂O: zero or at least 1; not more than 10
CaO+MgO: at least 10 or 15; not more than 30 or 25
TiO₂: zero or at least 1; not more than 6, 4 or 2
TiO₂+FeO: at least 4 or 6; not more than 18 or 12
B₂O₃: zero or at least 1; not more than 5 or 3
P₂O₅: zero or at least 1; not more than 8 or 5
Others: zero or at least 1; not more than 8 or 5

The MMVF made by the method of the invention preferably have the composition in percent by weight based upon the total weight of the MMVF:

| | |
|---|---|
| SiO₂ | 35 to 50 |
| Al₂O₃ | 12 to 30 |
| TiO₂ | up to 2 |
| Fe₂O₃ | 3 to 12 |
| CaO | 5 to 30 |
| MgO | up to 15 |
| Na₂O | 0 to 15 |
| K₂O | 0 to 15 |
| P₂O₅ | up to 3 |
| MnO | up to 3 |
| B₂O₃ | up to 3 |

Another preferred composition for the MMVF is as follows in percent by weight based upon the total weight of the MMVF:
SiO₂ 39-55% preferably 39-52%
Al₂O₃ 16-27% preferably 16-26%
CaO 6-20% preferably 8-18%
MgO 1-5% preferably 1-4.9%
Na₂O 0-15% preferably 2-12%
K₂O 0-15% preferably 2-12%
R₂O (Na₂O + K₂O) 10-14.7% preferably 10-13.5%
P₂O₅ 0-3% preferably 0-2%
Fe₂O₃ (iron total) 3-15% preferably 3.2-8%
B₂O₃ 0-2% preferably 0-1%
TiO₂ 0-2% preferably 0.4-1%
Others 0-2.0%

Glass fibres commonly comprise the following oxides, in percent by weight based upon the total weight of the glass fibres:
SiO₂: 50 to 70
Al₂O₃. 10 to 30
CaO: not more than 27
MgO: not more than 12
Glass fibres can also contain the following oxides, in percent by weight:
Na₂O+K₂O: 8 to 18, in particular Na₂O+K₂O greater than CaO+MgO
B₂O₃: 3 to 12

Some glass fibre compositions can contain Al₂O₃: less than 2% by weight.

Preferably, the man-made vitreous fibres in the storm water buffer system have a geometric mean fibre diameter of 1.5 to 10 microns, preferably 2 to 8 microns, more preferably 3 to 6 microns. This has the advantage of improving capillarity and therefore the storm water buffer system can absorb water more quickly and to a higher extent. The geometric mean fibre diameter may be obtained using a scanning electron microscope (SEM) as is known in the art.

Preferably, the storm water buffer system has a density in the range of 75 to 250 kg/m³, preferably 100 to 180 kg/m³. The advantage of this density is that the storm water buffer system has a relatively high compression strength. This is important as it may be installed in a position where people or vehicles need to travel over the ground above.

The binder can be an organic hydrophobic binder, and in particular it can be a conventional heat-curable (thermosetting), binder of the type which has been used for many years in MMVF-based products. This has the advantage of convenience and economy. Thus, the binder is preferably a phenol formaldehyde resin or urea formaldehyde resin, in particular phenol urea formaldehyde (PUF) resin.

The binder may be a formaldehyde-free binder, for example it may comprise a sugar, a furan, a lignin, a hydrocolloid, a carbohydrate, an amine, sulfamic acid or the like as a main component. The formaldehyde-free binder may be as described in any of the following publications: WO2004/007615, WO97/07664, WO07129202, WO2017/114724, WO2017/114723 or WO2020/070337.

Preferably, the storm water buffer system has a binder content in the range of 1% to 10 % by weight, preferably 2% to 5% by weight, based upon the total weight of the fibre and binder.

Preferably, the storm water buffer system is hydrophilic, that is, it does not repel water. Hydrophilic has its normal meaning in the art. An advantage of the buffer being hydrophilic is that is able to absorb a high volume of storm water quickly.

The hydrophilicity of the storm water buffer system may be defined in terms of the contact angle with water. Preferably the storm water buffer system has a contact angle with water of less than 90°. The contact angle is measured by a sessile drop measurement method. Any sessile drop method can be used, for example with a contact angle goniometer. In practice, a droplet is placed on the solid surface and an image of the drop is recorded in time. The static contact angle is then defined by fitting Young-Laplace equation around the droplet. The contact angle is given by the angle between the calculated drop shape function and the sample surface, the projection of which in the drop image is referred to as the baseline. The equilibrium contact angles are used for further evaluation and calculation of the surface free energy using the Owens, Wendt, Rabel and Kaeble method. The method for calculating the contact angle between material and water is well-known to the skilled person.

The hydrophilicity of the storm water buffer system may be defined by the hydraulic conductivity. Preferably the storm water buffer system has a hydraulic conductivity of 5 m/day to 300 m/day, preferably 50 m/day to 200 m/day. Hydraulic conductivity is measured in accordance with ISO 17312:2005. The advantage of this is that the buffer system fills up fast and water does not accumulate or stagnate in the void channel.

Without wishing to be bound by theory, the hydraulic conductivity of the storm water buffer is related to its density. A less dense buffer system may accommodate a greater volume of water. However, a less dense buffer system may also have a lower structural integrity. It is therefore preferable that the density of the buffer system is low enough to ensure a high hydraulic conductivity and compression strength without compromising the structural integrity of the buffer system.

A height and width of the void channel may be selected to optimize structural integrity while simultaneously optimizing the flow rate through the void channel. These may be selected for a given density of material to allow a desired optimum or maximum uptake of water in the buffer system. This optimization may also provide maximum infiltration of water into the surrounding ground.

The hydrophilicity of a sample of MMVF substrate can be measured by determining the sinking time of a sample. A sample of MMVF substrate having dimensions of 100x100x15 mm to 100x100x100 mm is required for determining the sinking time. A container with a minimum size of 200x200x200 mm is filled with water. The sinking time is the time from when the sample first contacts the water surface to the time when the test specimen is completely submerged. The sample is placed in contact with the water in such a way that a cross-section of 100x100 mm first touches the water. The sample will then need to sink a distance of just over the height of the sample in order to be completely submerged. The faster the sample sinks, the more hydrophilic the sample is. The MMVF substrate is considered hydrophilic if the sinking time is less than 240 s. Preferably the sinking time is less than 100 s, more preferably less than 60 s, most preferably 50 s. In practice, the MMVF substrate may have a sinking time of 50 s or less.

Preferably, the storm water buffer system is free from oil or substantially free from oil. Preferably, the storm water buffer system is substantially free from oil. By this, it is meant that storm water buffer system comprises only trace amounts of oil, for example less than 0.1 wt% of oil. Most preferably the storm water buffer system is free from oil. By this it is meant that the storm water buffer system has 0 wt% of oil. Oil is typically added to MMVF products which are to be used for purposes such as sound insulation, thermal insulation and fire protection. However, the storm water buffer system is sufficiently hydrophilic to absorb and store water when it is free from oil or substantially free from oil. In this embodiment, the binder composition may be hydrophilic or hydrophobic, as discussed above. Preferably, when the binder composition is hydrophobic, the storm water buffer system is free from or substantially free from oil.

Preferably, the storm water buffer system has a water holding capacity of at least 80% of the volume, preferably 80-99 %, most preferably 85-95 %. The greater the water holding capacity, the more water that can be stored for a given volume. The water holding capacity of the storm water buffer system is high due to the open pore structure of MMVF.

Preferably, the buffering capacity of the storm water buffer system, that is the difference between the maximum amount of water that can be held and the amount of water that is retained when the storm water buffer system gives off water, is at least 60 %vol, preferably at least 70 %vol, preferably at least 80 %vol. The buffering capacity may be 60 to 90 %vol, such as 60 to 85 %vol. The advantage of such a high buffering capacity is that the storm water buffer system can buffer more water for a given volume. That is, the storm water buffer system can store a high volume of water when it rains, and release a high volume of water when the grounds dries.

The water holding capacity, the amount of water retained and the buffering capacity of the storm water buffer system can be measured in accordance with EN 13041 - 1999.

In one embodiment, the storm water buffer system comprises coherent man-made vitreous fibres (MMVF) bonded with a cured binder composition. By "coherent" it is meant that the storm water buffer system is in the form of a coherent mass of MMVF i.e. a MMVF substrate or slab. That is, the storm water buffer system is generally a coherent matrix of MMVF fibres bonded with a cured binder composition, which has been produced as such, or has been formed, for example, by granulating a slab of MMVF and consolidating the granulated material. A coherent substrate is a single, unified substrate.

In another embodiment, the buffer material comprises granulated man-made vitreous fibres (MMVF) bonded with a cured binder composition. In this embodiment, the buffer layer is made by packing the granulated MMVF into a space confined by MMVF slabs or other water-permeable grating, for example, a net with a mash-size small enough to hold the granulated material. A benefit of this is that the granulate MMVF can be used to fill any sized shape without the need to cut material on site, i.e. installation is faster and simpler.

The mechanical stability of the system may be improved by additional support elements, such as, but not limited to, a metal carcass or concrete elements.

In another embodiment, the storm water buffer system (5) comprises one or more water storage elements (8), shown in Figures 1 to 4, wherein the one or more water storage element is formed of a coherent man-made vitreous fibre substrate (MMVF substrate), and wherein the MMVF substrate comprises man-made vitreous fibres bonded with a cured binder composition. Essentially, the storm water buffer system may be formed of one or more water storage elements, or a plurality of water storage elements positioned together.

In this embodiment, the one or more water storage elements are in fluid communication with each other. Preferably, one water storage element is positioned adjacent and in direct contact with another water storage element and so on. This can be continued to form an array of water storage elements - shown in Figures 1 to 4. Thus the storm water buffer system can be formed of an array of water storage elements. The benefit of this is that installation is very flexible, and water storage elements can be added or removed as desired. The one water storage element may comprise a passage to transport water away from the void channel.

In this embodiment, the passage will have an opening in fluid communication with the void channel. Vertical orientation of the water storage elements can also improve stability of the system: if the lid is positioned on elements that are in vertical orientation and, hence, perpendicular to the lid, the system will be more stable compared to when the elements are placed in horizontal orientation, that is parallel to the lid, unless the predominant fibre direction in the water storage elements is defining the thickness of said elements (so-called Lamellas).

The water storage element may have any suitable shape and size, but is preferably has a length in the range of 80 cm to 150 cm; a height in the range of 10 cm to 60 cm; and a width in the range of 5 cm to 30 cm. For further ease of construction, the height of the void channel may be the same as the height of the water storage element.

The water storage elements may have any of the preferred features described above for the storm water buffer system.

Preferably, the man-made vitreous fibres in the water storage element have a geometric mean fibre diameter of 1.5 to 10 microns, preferably 2 to 8 microns, more preferably 3 to 6 microns. This has the advantage of improving capillarity and therefore the storm water buffer system can absorb water more quickly. The geometric mean fibre diameter may be obtained using a scanning electron microscope (SEM) as is known in the art.

Preferably, the water storage element has a density in the range of 75 to 250 kg/m³, preferably 100 to 180 kg/m³. The advantage of this density is that the storm water buffer system has a relatively high compression strength. This is important as it may be installed in a position where people or vehicles need to travel over the ground above.

The binder in the water storage elements can be an organic hydrophobic binder, and in particular it can be a conventional heat-curable (thermosetting), binder of the type which has been used for many years in MMVF-based products. This has the advantage of convenience and economy. Thus, the binder is preferably a phenol formaldehyde resin or urea formaldehyde resin, in particular phenol urea formaldehyde (PUF) resin.

The binder may be a formaldehyde-free binder, for example it may comprise a sugar, a furan, a lignin, a hydrocolloid, a carbohydrate, an amine, sulfamic acid or the like as a main component. The formaldehyde-free binder may be as described in any of the following publications: WO2004/007615, WO97/07664, WO07129202, WO2017/114724, WO2017/114723 or WO2020/070337.

Preferably, the water storage element has a binder content in the range of 1% to 10 % by weight, preferably 2% to 5% by weight, based upon the total weight of the fibre and binder.

Preferably, the water storage element is hydrophilic. An advantage of the buffer being hydrophilic is that is able to absorb a high volume of storm water quickly. Preferably the water storage element has a contact angle with water of less than 90°. Preferably the water storage element has a hydraulic conductivity of 5 m/day to 300 m/day, preferably 50 m/day to 200 m/day.

Preferably, the water storage element is free from oil or substantially free from oil. Preferably, the water storage element is substantially free from oil. By this, it is meant that water storage element comprises only trace amounts of oil, for example less than 0.1 wt% of oil. Most preferably the water storage element is free from oil. By this it is meant that the water storage element has 0 wt% of oil.

Preferably, the water storage element has a water holding capacity of at least 80% of the volume, preferably 80-99 %, most preferably 85-95 %.

Preferably the buffering capacity of the water storage element is at least 60 %vol, preferably at least 70 %vol, preferably at least 80 %vol. The buffering capacity may be 60 to 90 %vol, such as 60 to 85 %vol. The advantage of such a high buffering capacity is that the storm water buffer system can buffer more water for a given volume, that is the storm water buffer system can store a high volume of water when it rains, and release a high volume of water when required.

The storm water collection system comprises a lid (6) positioned on top of the storm water buffer system such that the upper surface of the void channel is formed by the lid. This can be seen in Figures 1 to 4.

Preferably the top surface of the storm water buffer system is substantially planar i.e. it is substantially flat. Thus the lid can be positioned on top of the storm water buffer system such that it spans from the buffer system on the first side of the void channel to the buffer system on the second side of the buffer system. In doing so, it encloses the void channel and forms the top surface of the void channel. Preferably the lid encloses the entire length of the upper surface of the void channel.

Preferably the lid is formed of any material suitable for enclosing the void channel and withstanding a load from above. For example, it may be concrete, preferably reinforced concrete. These materials are preferred as they are capable of withstanding high loads from above, such as people or vehicles.

As mentioned, the lid provides structural integrity to the void channel, and prevents debris and the like from entering the void channel from the top. This means the void channel may be sufficiently wide to accommodate a large amount of storm water entering the void channel in a short time, without the void space collapsing. In this way, the void channel can be much wider than existing system in which a pipe is formed within MMVF material. It is also easier to construct and install.

Preferably, the lid comprises one or more air vents (7) to allow air to pass out of the void channel. As the storm water buffer system fills up with storm water, air will be displaced and pass into the void channel. The air vent provides a means for this air to escape quickly thus maximising the amount of water that can be stored in the storm water buffer system.

Preferably the air vent is an aperture in the lid enclosing the void channel. Preferably the air vent has an opening with a diameter of 2 mm to 150 mm.

In another embodiment, the storm water storage system comprises an air vent in the collection well or the storm water buffer system.

Further, the lid, the storm water collection well and/or the storm water buffer system may comprise one or more air vents.

In use, the storm water collection system is buried or partially buried underground, so it is preferred that the air vent is in fluid communication with a conduit which protrudes above the ground. Preferably the conduit is a pipe. An advantage of a pipe is that it is hollow and can therefore freely transport air and prevents debris from entering the pipe.

The present invention also relates to a method of installing a storm water storage system, comprising the step of positioning at least one storm water storage system as described herein in the ground.

The method of installing a storm water storage system may comprise the steps of:
- installing a storm water collection well (1) in the ground;
- positioning a storm water buffer system (5) in the ground such that one or more void channels (4) are formed;
- positioning a lid (6) on top of the storm water buffer system (5) such that the void channel is enclosed.

The storm water storage system will usually be below the ground. During its installation, a hole may be dug in the ground with the storm water storage system being installed in the hole. Alternatively, the storm water storage system may be installed at the existing ground level, with earth then piled up against the storm water storage system effective burying it in the ground. In view of this, the term "in the ground" may also be understood to also mean "on the ground" with the associated features, or storm water storage system as a whole, subsequently being buried such that it ends up in the ground.

The storm water storage system may have any of the preferred features described above in detail.

Preferably, the storm water storage system is installed such that it is partially or entirely underground. Preferably, the storm water storage system is entirely underground, except for the lid of the storm water collection well (which is visible for access). Preferably, the storm water storage system is covered with a top surface suitable for use as a road or pavement. Preferably, the top surface has a depth of at least 40 cm.

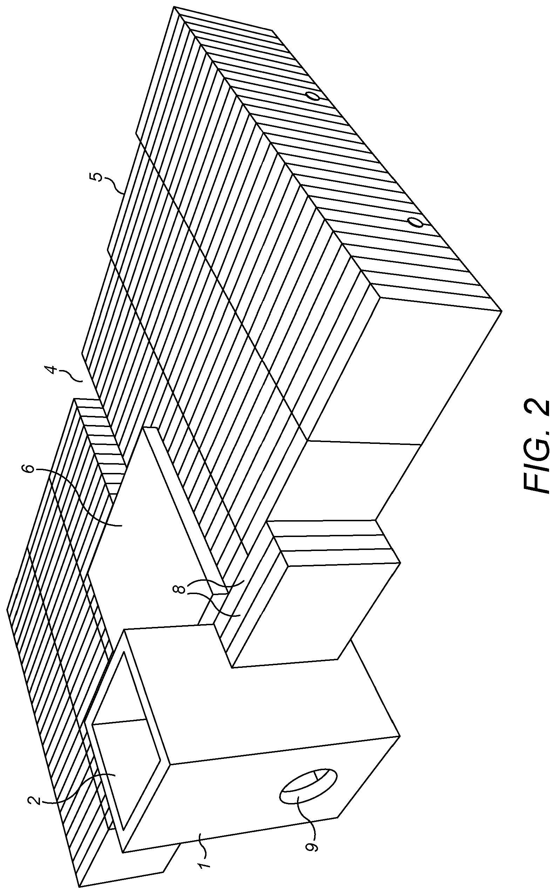

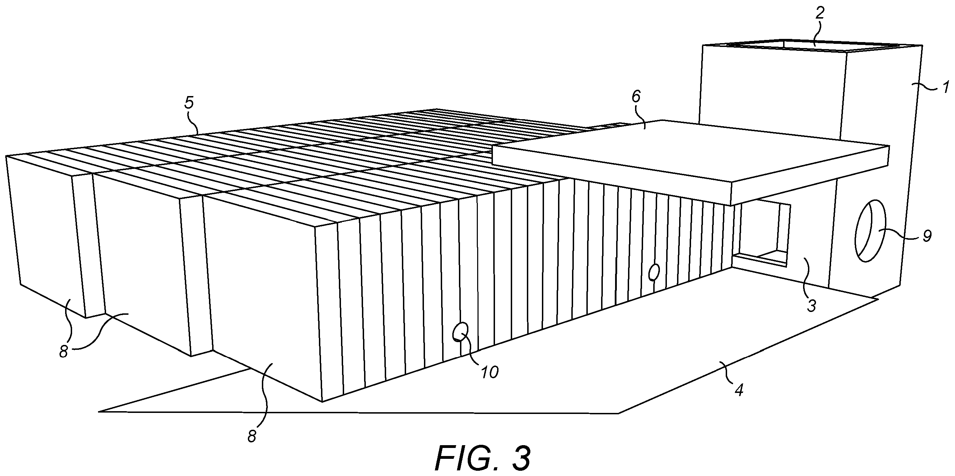

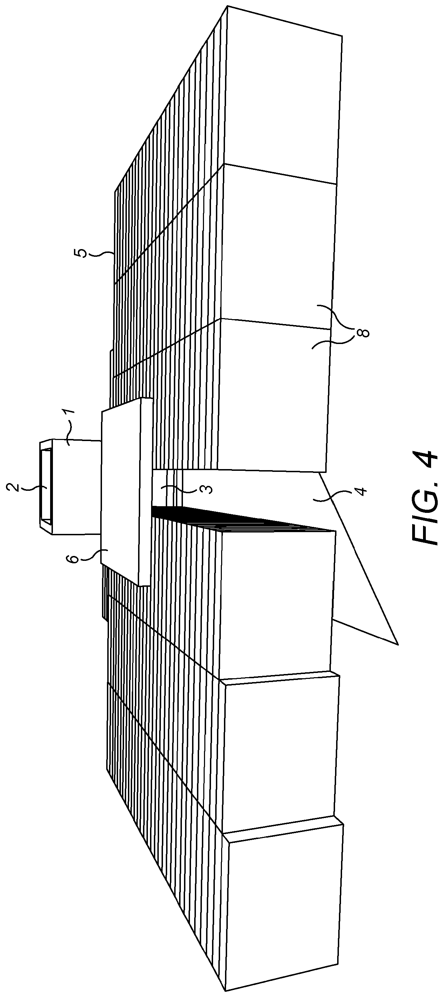

Figures 1 and 4 show a front view of a storm water storage system according to an embodiment of the invention. The top of the storm water collection well (1) comprises at least one inlet selected from (2), (9) (not visible in Figure 1 but shown in Figures 2 and 3) . Storm water passes into the storm water collection well (1) via this inlet (2), (9) (not visible in Figure 1 but shown in Figures 2 and 3) and passes through at least one outlet (3) (not shown in Figure 1 but visible in Figure 4) into the void channel (4). At least two side surfaces of the void channel are enclosed and in fluid communication with a storm water buffer system (5). The storm water buffer system (5) comprises multiple water storage elements (8) positioned to be in fluid communication with each other. Thus, storm water entering the void channel (4) can pass into the water storage elements (8) of the storm water buffer system (5). Figure 1 also shows that the top surface of the void channel (4) is formed by a lid (6) which comprises an air vent (7). Figure 2 shows a back view of the embodiment of Figure 1. Figure 2 shows at least one inlet (9), positioned in at least one side wall of the storm water collection well (1). The inlets (2), (9) can receive a sleeve for pumped storm water arriving from active draining of surrounding areas or for example house basements by pumping, or it could be used as a passive inlet receiving storm water flowing in when the storm water level is above the inlet (2), (9).

Figure 3 shows a cross-section of a storm water storage system according to an embodiment of the invention. The storm water collection well (1) comprises an inlet (2) at its top, an inlet (9) in a side wall of the storm water collection well (1) and an outlet (3) in another side wall of said well (1). The outlet (3) is in fluid communication with the void channel (4). At least two side surfaces of the void channel are enclosed and in fluid communication with a storm water buffer system (5). The storm water buffer system (5) comprises multiple water storage elements (8) positioned to be in fluid communication with each other. The water storage elements (8) may contain a passage (10) to speed up the rate at which water can enter the elements (8) for storage.

## Claims

1. A storm water storage system comprising:
- a storm water collection well (1) having at least one inlet (2,9) for storm water to enter the storm water collection well (1); and one or more outlets (3) for storm water to exit the storm water collection well (1);
- one or more void channels (4) each having a bottom surface, an upper surface and side surfaces, wherein each void channel extends away from and is in fluid communication with at least one outlet (3) and each void channel has a width in the range of 20 cm to 200 cm;
- a storm water buffer system (5) comprising man-made vitreous fibres (MMVF) bonded with a cured binder composition, wherein the storm water buffer system encloses and is in fluid communication with at least one side surface of the one or more void channels (4);
- a lid (6) positioned on top of the storm water buffer system (5) such that the upper surface of the void channel is formed by the lid (6), wherein the lid comprises a manhole or inspection cover.

2. The storm water storage system according to claim 1, wherein the bottom surface of each of the one or more void channels (4) is formed of a geotextile material or concrete.

3. The storm water storage system according to claim 1 or claim 2, wherein the storm water collection well (1) is covered by a storm water collection well lid.

4. The storm water storage system according to any preceding claim, wherein the one or more void channels (4) have a height in the range of 30 cm to 200 cm, preferably 50 cm to 150 cm, optionally with a length of 1 m to 100 m and/or a width in the range of 30 cm to 150 cm, preferably 50 cm to 80 cm.

5. The storm water storage system according to any preceding claim, wherein the storm water collection well (1) has one or more side walls, a bottom and a top defining an internal volume, wherein the top or at least one side wall comprises the at least one inlet (2,9) for storm water to enter the internal volume of the storm water collection well (1); and wherein at least one side wall comprises the one or more outlets (3) for storm water to exit the internal volume of the storm water collection well (1).

6. The storm water storage system according to any preceding claim, wherein the one or more void channels (4) extend substantially horizontally away from at least one outlet (3).

7. The storm water storage system according to any preceding claim, wherein the storm water buffer system (5) encloses and is in fluid communication with two side surfaces of one or more void channels (4), more preferably, three side surfaces of one or more void channels (4).

8. The storm water storage system according to any preceding claim, wherein the lid (6), the storm water collection well (1) and/or the storm water buffer system (5) comprises one or more air vents (7) to allow air to pass out of the one or more void channels (4).

9. The storm water storage system according to any preceding claim, wherein the storm water buffer system comprises one or more water storage elements (8), preferably the one or more water storage elements (8) are formed of a coherent man-made vitreous fibre substrate (MMVF substrate), wherein the MMVF substrate comprises man-made vitreous fibres bonded with a cured binder composition.

10. The storm water storage system according to any preceding claim, wherein the lid (6) comprises concrete.

11. The storm water storage system according to any preceding claim, wherein the storm water collection well further comprises a trap.

12. The storm water storage system according to any preceding claim, wherein the storm water buffer system (5) has a density in the range of 75 to 250 kg/m³, preferably 100 to 180 kg/m³ and/or wherein the man-made vitreous fibres in the storm water buffer system (5) have a geometric mean fibre diameter of 1.5 to 10 microns, preferably 2 to 8 microns, more preferably 3 to 6 microns.

13. The storm water storage system according to any preceding claim, wherein the storm water buffer system (5) is hydrophilic, preferably the storm water buffer system (5) has a contact angle with water of less than 90° and/or a hydraulic conductivity of 5 m/day to 300 m/day, more preferably 50 m/day to 200 m/day.

14. A method of installing a storm water storage system, comprising the step of positioning at least one storm water storage system according to any preceding claim in the ground.

15. A method according to claim 14, comprising the steps of:
- installing a storm water collection well (1) in the ground;
- positioning a storm water buffer system (5) in the ground such that one or more void channels (4) are formed;
- positioning a lid (6) on top of the storm water buffer system (5) such that the void channel is enclosed.

## Patentansprüche

1. Regenwasserspeichersystem, umfassend:
- einen Regenwassersammelschacht (1), der mindestens einen Einlass (2, 9) für Regenwasser aufweist, das in den Regenwassersammelschacht (1) eintritt; und einen oder mehrere Auslässe (3) für Regenwasser, das aus dem Regenwassersammelschacht (1) austritt;
- einen oder mehrere Hohlkanäle (4), die jeweils eine Bodenfläche, eine obere Fläche und Seitenflächen aufweisen, wobei sich jeder Hohlkanal von mindestens einem Auslass (3) weg erstreckt und mit diesem in Fluidverbindung steht und jeder Hohlkanal eine Breite im Bereich von 20 cm bis 200 cm aufweist;
- ein Regenwasserpuffersystem (5), umfassend künstliche Glasfasern (MMVF), die mit einer ausgehärteten Bindemittelzusammensetzung gebondet sind, wobei das Regenwasserpuffersystem mindestens eine Seitenfläche des einen oder der mehreren Hohlkanäle (4) umschließt und mit diesen in Fluidverbindung steht;
- einen Deckel (6), der so oben auf dem Regenwasserpuffersystem (5) positioniert ist, dass die obere Oberfläche des Hohlkanals durch den Deckel (6) gebildet wird, wobei der Deckel eine Mannloch- oder Inspektionsabdeckung umfasst.

2. Regenwasserspeichersystem nach Anspruch 1, wobei die Bodenfläche jedes des einen oder der mehreren Hohlkanäle (4) aus einem Geotextilmaterial oder Beton gebildet ist.

3. Regenwasserspeichersystem nach Anspruch 1 oder Anspruch 2, wobei der Regenwassersammelschacht (1) mit einem Regenwassersammelschacht-Deckel abgedeckt ist.

4. Regenwasserspeichersystem nach einem der vorstehenden Ansprüche, wobei der eine oder die mehreren Hohlkanäle (4) eine Höhe im Bereich von 30 cm bis 200 cm, bevorzugt 50 cm bis 150 cm, optional mit einer Länge von 1 m bis 100 m und/oder einer Breite im Bereich von 30 cm bis 150 cm, bevorzugt 50 cm bis 80 cm, aufweisen.

5. Regenwasserspeichersystem nach einem der vorstehenden Ansprüche, wobei der Regenwassersammelschacht (1) eine oder mehrere Seitenwände, eine Unterseite und eine Oberseite aufweist, die ein Innenvolumen definieren, wobei die Oberseite oder mindestens eine Seitenwand mindestens einen Einlass (2, 9) für Regenwasser umfasst, damit dieses in das Innenvolumen des Regenwassersammelschachtes (1) eintreten kann; und wobei mindestens eine Seitenwand einen oder mehrere Auslässe (3) umfasst, durch die Regenwasser aus dem Innenraum des Regenwassersammelschachtes (1) austreten kann.

6. Regenwasserspeichersystem nach einem der vorstehenden Ansprüche, wobei sich der eine oder die mehreren Hohlkanäle (4) im Wesentlichen horizontal von mindestens einem Auslass (3) weg erstrecken.

7. Regenwasserspeichersystem nach einem der vorstehenden Ansprüche, wobei das Regenwasserpuffersystem (5) zwei Seitenflächen eines oder mehrerer Hohlkanäle (4) umschließt und mit diesen in Fluidverbindung steht, bevorzugt drei Seitenflächen eines oder mehrerer Hohlkanäle (4).

8. Regenwasserspeichersystem nach einem der vorstehenden Ansprüche, wobei der Deckel (6), der Regenwassersammelschacht (1) und/oder das Regenwasserpuffersystem (5) eine oder mehrere Entlüftungsöffnungen (7) umfasst, damit Luft aus dem einen oder den mehreren Hohlkanälen (4) entweichen kann.

9. Regenwasserspeichersystem nach einem der vorstehenden Ansprüche, wobei das Regenwasserpuffersystem ein oder mehrere Wasserspeicherelemente (8) umfasst, bevorzugt, wobei das eine oder die mehreren Wasserspeicherelemente (8) aus einem zusammenhängenden künstlichen Glasfasersubstrat (MMVF-Substrat) gebildet sind, wobei das MMVF-Substrat künstliche Glasfasern umfasst, die mit einer ausgehärteten Bindemittelzusammensetzung gebondet sind.

10. Regenwasserspeichersystem nach einem der vorstehenden Ansprüche, wobei der Deckel (6) Beton umfasst.

11. Regenwasserspeichersystem nach einem der vorstehenden Ansprüche, wobei der Regenwassersammelschacht weiter einen Wasserverschluss umfasst.

12. Regenwasserspeichersystem nach einem der vorstehenden Ansprüche, wobei das Regenwasserpuffersystem (5) eine Dichte im Bereich von 75 bis 250 kg/m³ aufweist, bevorzugt 100 bis 180 kg/m³ und/oder wobei die künstlichen Glasfasern im Regenwasserpuffersystem (5) einen geometrischen mittleren Faserdurchmesser von 1,5 bis 10 Mikrometern, bevorzugt von 2 bis 8 Mikrometern, noch bevorzugter von 3 bis 6 Mikrometern aufweisen.

13. Regenwasserspeichersystem nach einem der vorstehenden Ansprüche, wobei das Regenwasserpuffersystem (5) hydrophil ist, bevorzugt, wobei das Regenwasserpuffersystem (5) einen Kontaktwinkel mit Wasser von weniger als 90° und/oder eine hydraulische Leitfähigkeit von 5 m/Tag bis 300 m/Tag, noch bevorzugter von 50 m/Tag bis 200 m/Tag aufweist.

14. Verfahren zum Einbauen eines Regenwasserspeichersystems, umfassend den Schritt des Positionierens mindestens eines Regenwasserspeichersystems nach einem der vorstehenden Ansprüche im Boden.

15. Verfahren nach Anspruch 14, umfassend die Schritte von:
- Einbauen eines Regenwassersammelschachtes (1) im Boden;
- Positionieren eines Regenwasserpuffersystems (5) im Boden, so dass ein oder mehrere Hohlkanäle (4) gebildet werden;
- Positionieren eines Deckels (6) oben auf dem Regenwasserpuffersystem (5), sodass der Hohlkanal geschlossen ist.

## Revendications

1. Système de stockage d'eaux pluviales comprenant :
- un puits de collecte d'eaux pluviales (1) présentant au moins une entrée (2, 9) destinée à l'entrée d'eaux pluviales dans le puits de collecte d'eaux pluviales (1) ; et une ou plusieurs sorties (3) destinées à la sortie d'eaux pluviales du puits de collecte d'eaux pluviales (1) ;
- un ou plusieurs canaux vides (4) présentant chacun une surface inférieure, une surface supérieure et des surfaces latérales, dans lequel chaque canal vide s'étend à partir d'au moins une sortie (3) et est en communication avec celle-ci et chaque canal vide présente une largeur dans la plage de 20 cm à 200 cm ;
- un système tampon d'eaux pluviales (5) comprenant des fibres vitreuses artificielles (MMVF) liées avec une composition de liant durcie, dans lequel le système tampon d'eaux pluviales encloisonne et est en communication de fluides avec au moins une surface latérale des un ou plusieurs canaux vides (4) ;
- un couvercle (6) positionné sur le dessus du système tampon d'eaux pluviales (5) de telle sorte que la surface supérieure du canal vide est formée par le couvercle (6), dans lequel le couvercle comprend un trou d'homme ou une trappe d'inspection.

2. Système de stockage d'eaux pluviales selon la revendication 1, dans lequel la surface inférieure de chacun des un ou plusieurs canaux vides (4) est formée d'un matériau géotextile ou de béton.

3. Système de stockage d'eaux pluviales selon la revendication 1 ou la revendication 2, dans lequel le puits de collecte d'eaux pluviales (1) est recouvert par un couvercle de puits de collecte d'eaux pluviales.

4. Système de stockage d'eaux pluviales selon une quelconque revendication précédente, dans lequel les un ou plusieurs canaux vides (4) présentent une hauteur dans la plage de 30 cm à 200 cm, de préférence de 50 cm à 150 cm, facultativement une longueur de 1 m à 100 m et/ou une largeur dans la plage de 30 cm à 150 cm, de préférence de 50 cm à 80 cm.

5. Système de stockage d'eaux pluviales selon une quelconque revendication précédente, dans lequel le puits de collecte d'eaux pluviales (1) présente une ou plusieurs parois latérales, un fond et un sommet définissant un volume interne, dans lequel le sommet ou au moins une paroi latérale comprend l'au moins une entrée (2, 9) destinée à l'entrée d'eaux pluviales dans le volume interne du puits de collecte d'eaux pluviales (1) ; et dans lequel au moins une paroi latérale comprend les une ou plusieurs sorties (3) destinées à la sortie d'eaux pluviales du volume interne du puits de collecte d'eaux pluviales (1).

6. Système de stockage d'eaux pluviales selon une quelconque revendication précédente, dans lequel les un ou plusieurs canaux vides (4) s'étendent sensiblement horizontalement à partir d'au moins une sortie (3).

7. Système de stockage d'eaux pluviales selon une quelconque revendication précédente, dans lequel le système tampon d'eaux pluviales (5) encloisonne et est en communication de fluide avec deux surfaces latérales d'un ou plusieurs canaux vides (4), plus préférablement, trois surfaces latérales d'un ou plusieurs canaux vides (4).

8. Système de stockage d'eaux pluviales selon une quelconque revendication précédente, dans lequel le couvercle (6), le puits de collecte d'eaux pluviales (1) et/ou le système tampon d'eaux pluviales (5) comprennent un ou plusieurs orifices d'aération (7) pour permettre à l'air de sortir des un ou plusieurs canaux vides (4).

9. Système de stockage d'eaux pluviales selon une quelconque revendication précédente, dans lequel le système tampon d'eaux pluviales comprend un ou plusieurs éléments de stockage d'eau (8), de préférence les un ou plusieurs éléments de stockage d'eau (8) sont formés d'un substrat cohérent de fibres vitreuses artificielles (substrat MMVF), dans lequel le substrat MMVF comprend des fibres vitreuses artificielles liées avec une composition de liant durcie.

10. Système de stockage d'eaux pluviales selon une quelconque revendication précédente, dans lequel le couvercle (6) comprend du béton.

11. Système de stockage d'eaux pluviales selon une quelconque revendication précédente, dans lequel le puits de collecte d'eaux pluviales comprend en outre une trappe.

12. Système de stockage d'eaux pluviales selon une quelconque revendication précédente, dans lequel le système tampon d'eaux pluviales (5) présente une densité dans la plage de 75 à 250 kg/m³, de préférence de 100 à 180 kg/m³ et/ou dans lequel les fibres vitreuses artificielles dans le système tampon d'eaux pluviales (5) présentent un diamètre de fibre moyen géométrique de 1,5 à 10 microns, de préférence de 2 à 8 microns, plus préférablement de 3 à 6 microns.

13. Système de stockage d'eaux pluviales selon une quelconque revendication précédente, dans lequel le système tampon d'eaux pluviales (5) est hydrophile, de préférence le système tampon d'eaux pluviales (5) présente un angle de contact avec l'eau de moins de 90 ° et/ou une conductivité hydraulique de 5 m/jour à 300 m/jour, plus préférablement de 50 m/jour à 200 m/jour.

14. Procédé d'installation d'un système de stockage d'eaux pluviales, comprenant l'étape consistant à positionner au moins un système de stockage d'eaux pluviales selon une quelconque revendication précédente dans le sol.

15. Procédé selon la revendication 14, comprenant les étapes consistant à :
- installer un puits de collecte d'eaux pluviales (1) dans le sol ;
- positionner un système tampon d'eaux pluviales (5) dans le sol de telle sorte qu'un ou plusieurs canaux vides (4) sont formés ;
- positionner un couvercle (6) sur le dessus du système tampon d'eaux pluviales (5) de telle sorte que le canal vide est encloisonné.
